# EUROPEAN PATENT SPECIFICATION

(11) **EP 1 514 881 B1**
(45) Date of publication and mention of the grant of the patent: **27.08.2008**
(21) Application number: 04255169.7
(22) Date of filing: 26.08.2004
(51) Int. Cl.: C08F 8/44, C08F 8/36, C10M 151/02, C10M 159/24

(54) **Improved process for the preparation of stabilized polyalkenyl sulfonic acids**
Verbessertes Verfahren zur Herstellung von stabilisierten Polyalkenylsulfonsäuren
Procédé amélioré de préparation d'acides polyalcénylsulfoniques stabilisés

(30) Priority: 12.09.2003 US 660948
(43) Date of publication of application: 16.03.2005
(73) Proprietor: Chevron Oronite Company LLC, San Ramon, CA 94583-2324 (US)
(72) Inventor: Meyer, Jesse, Pinole California 94564 (US); Nelson, Richard J., Pinole California 94564 (US); King, William F., Novato California 94947 (US); Harrison, James J., Novato California 94947 (US); Campbell, Curtis B., Hercules California 94547 (US); Spala, Eugene E., Fairfield California 94534 (US)
(74) Representative: Nash, David Allan

(56) References cited:
- WO-A-01/70830
- WO-A-03/020822
- US-A- 3 950 401
- US-A- 3 954 849
- US-A- 4 193 764

## Description

### BACKGROUND OF THE INVENTION

### Field of the Invention

Sulfonates are a class of chemicals used in household, industrial, and institutional cleaning applications; personal care and agricultural products; metalworking fluids; industrial processes; emulsifying agents; corrosion inhibitors and as additives in lubricating oils. Some of the desirable properties of sulfonates for use in lubricating oil applications include their low cost, compatibility, water tolerance, corrosion inhibition, emulsion performance, friction properties, high temperature stability, rust performance, and light color.

Sulfonates used in lubricating oil applications have been classified as either neutral, low overbased (LOB) sulfonates, or high overbased (HOB) sulfonates.

In the past, lubricating oil sulfonates, called natural sulfonates, were made as a by-product of white oil and process oil production. More recently, due to the desire for higher utilization of raw materials and hence improved economics, synthetic sulfonates, derived from alkyl aromatic feedstocks, have increased in use. Unfortunately, synthetic sulfonates can have inferior performance properties compared to natural sulfonates and thus the search for economical viable sulfonates with performance properties more like natural sulfonates is an area of continuing research.

Polyalkenyl sulfonates are a class of sulfonates that have desirable performance properties in lubricating oil applications. One of the most commonly employed sulfonation technologies utilizes a mixture of sulfur trioxide SO₃ and air (SO₃/Air). The production of polyalkenyl sulfonic acids is most economically achieved by sulfonating a polyalkene with SO₃ gas in a gas/liquid reaction. When a polyalkene reacts with sulfur trioxide (SO₃) in a gas/liquid reaction, undesirable side reactions occur that reduce the quality and quantity of the desired polyalkenyl sulfonic acid. There are three primary side reactions that occur most predominantly: (1) the degradation of the polyalkenyl sulfonic acid; (2) the formation of sultone molecules; and (3) the formation of lower molecular weight polyalkenyl sulfonic acids from fragmentation reactions. The degradation of the polyalkenyl sulfonic acid lowers the yield of the desired polyalkenyl sulfonic acid, as does the formation of sultones. The fragmentation of the polyalkenyl sulfonic acid molecule results in undesirable short-chained sulfonic acids. Usually, sulfonic acids may be overbased to prepare sulfonates that are useful for the aforementioned applications; however, a low yield of sulfonic acids results in a low yield of the sulfonate product.

An improved process for producing polyalkenyl sulfonic acids in a polyalkenesulfur trioxide gas/liquid reaction, which decreases the degradation reactions of the polyalkene sulfonic acid and the formation of sultones and fragmentation products and stabilizes the polyalkenyl sulfonic acid product, has now been discovered.

An advantage of this improved process is the reduction of fragmentation reactions that produce lower molecular weight sulfonic acid and the reduction of sultone formation, as well as an increase in the quantity of the resulting sulfonates prepared from the polyalkenyl sulfonic acid.

### Description of the Related Art

Harrison et al., U.S. Patent No. 6,410,491, disclose a method of making polyalkenyl sulfonates wherein the polyalkenyl sulfonic acid is derived from a mixture of polyalkenes comprising greater than 20 mole percent alkyl vinylidene and 1,1-dialkyl isomers and a method for making the same.

Le Coent, U.S. Patent No. 4,764,295, discloses non-foaming detergent-dispersant additives and the method of making such additives from alkarylsulfonates of alkaline earth metals.

Alcock et al., U.S. Patent No. 5,789,615, disclose a method of making sulfonates by adding sulfonic acid to a dispersion of basic hydroxide or oxide in a water/diluent mixture to form a reaction mixture. Sulfonic acid is added in stages during the reaction to maintain the basicity of the reaction mixture.

Karll et al., U.S. Patent No. 3,954,849, disclose a method of making alkenyl sulfonates by reacting propene or butene polymers having a number average molecular weight of 250-500 with gaseous sulfur trioxide in falling-film or static reactors. A two-stage neutralization of the sulfonation product with ammonia or sodium hydroxide is used to reduce sultone content and increase the sulfonate in the neutralized product.

Rath, U.S. Patent No. 5,408,018, discloses a method for preparing highly reactive polyisobutenes containing more than 80 mole percent terminal vinylidene groups and having an average molecular weight of 500 to 5,000 Dalton.

The Related Art, Harrison et al., U.S. Patent No. 6,410,491; Le Coent, U.S. Patent No. 4,764,295; Alcock et al., U.S. Patent No. 5,789,615; Karll et al., U.S. Patent No. 3,954,849; and Rath, U.S. Patent No. 5,408,018.

### SUMMARY OF THE INVENTION

The present invention provides an improved process for making polyalkenyl sulfonic acids and the corresponding overbased sulfonates. The improved process increases the yield of long-chain polyalkenyl sulfonic acid by stabilizing the polyalkenyl sulfonic acids and decreasing the amount of sultone formation and fragmentation reactions.

Accordingly, in one aspect, the present invention is directed to a process for making a stabilized polyalkenyl sulfonic acid comprising:
(a) reacting a polyalkene with SO₃ in a first reaction vessel; and
(b) stabilizing the product of step (a) by neutralizing with a neutralizing agent as the product of step (a) exits the first reaction vessel and prior to or concurrently with entering a second vessel for further reaction or storage, wherein neutralization occurs in the absence of ammonia or sodium hydroxide, wherein the neutralizing agent is an alkaline earth metal hydroxide, and wherein the time between when the product of step (a) exits the first reaction vessel and is stabilized by neutralization is between 2 seconds and 10 minutes.

In another aspect, the present invention is directed to a process for overbasing polyalkenyl sulfonic acid with an alkaline earth metal and wherein water is used as a promoter.

### BRIEF DESCRIPTION OF DRAWINGS

Figure 1 depicts the % Ca as Sulfonate and % Sulfuric Acid levels determined by the Cyclohexylamine titration method for an unstabilized PIB sulfonic acid prepared by the SO₃/Air sulfonation of 550 MW PIB as a function of time when stored at 40°C (104°F).
Figure 2 depicts the % Ca Sulfonate determined by the Hyamine titration method of an unstabilized PIB sulfonic acid stored at 40°C (104°F) and 60°C (140°F).
Figure 3 depicts the % Ca Sulfonate (determined by the Hyamine titration method) for PIB Sulfonic acid prepared by SO₃/Air sulfonation followed by stabilization of the PIB sulfonic acid by neutralization (with lime slurry) as a function of time when stored at 40°C (104°F) and 60°C (140°F).
Figure 4 depicts the negative ion electrospray mass spectrum (ESMS) of an unstabilized 550 MW polyisobutene sulfonic acid produced by SO₃/Air sulfonation.
Figure 5 depicts the negative ion electrospray mass spectrum (ESMS) of a 550 MW PIB sulfonic acid stabilized by neutralization with a slurry of lime in oil.

### DETAILED DESCRIPTION OF THE INVENTION

### Definitions

Unless specifically stated otherwise, the following terms will have the following meaning:
"PIB" ― Polyisobutene having a number average molecular weight of from 300 to 1000 unless otherwise stated.
"% Ca as Sulfonate" is determined by titration using the analytical technique referred to as the Cyclohexylamine Titration.
"% Sulfonic Acid" is determined by titration using the analytical technique referred to as the Cyclohexylamine Titration.
"% Ca Sulfonate" is determined by titration using the analytical technique referred to as the Hyamine Titration.
"% Hyamine Actives" or "% Hyamine Active Technique (HAT)" is determined by titration using the analytical technique referred to as the Hyamine Titration. "Low overbased" ― TBN from 0 to 100.
"Moderate overbased" ― TBN from 101 to 250.
"High overbased" ― TBN from 251 to 400.
"High high overbased" ― TBN greater than 400.
"TBN" is an analytical titration measurement and refers to Total Base Number and equals the milliequivalents of KOH per gram of sample being titrated.

The term "alkylvinylidene isomer" refers to a formula of the structure: 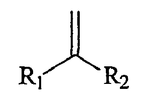 where R₁ and R₂ are alkyl groups.

The term "methyl vinylidene isomer" refers to the structure above where R₁ or R₂ is methyl.

The term "1,1-dialkyl isomer" refers to a formula of the structure: 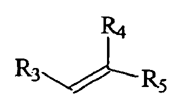 wherein R₃, R₄ and R₅ are alkyl groups.

The term "1,1-dimethyl isomer" refers to the structure above wherein R₄ and R₅ are methyl.

The term "degree of neutralization" refers to the number of mole equivalents of the neutralizing agent divided by the number of moles of acid times 100.

### Sulfonation

The polyalkenyl sulfonic acid product of the present invention is stable to degradation with time and temperature and also contains a small amount of sultones and a decreased amount of fragmentation products which would normally form during SO₃/air sulfonations. Typically, the product of the present invention is a mixture of polyalkenyl sulfonic acid, sulfuric acid, recovered polyalkene, sultones, and sulfur trioxide. The mixture also comprises lower molecular weight fragmentation products of the polyalkenyl sulfonic acids. In accordance with the present invention, decreased amounts of sultones and fragmentation products can be achieved by stabilizing the reaction product of the polyalkene and SO₃ reaction by neutralizing the product as it exits a first reaction vessel and prior to or concurrently with entering a second vessel which is used for further reaction or storage. At least one of the following steps in the process of making polyalkenyl sulfonic acid may be additionally employed: using optimum sulfonation conditions, diluting the polyalkene feedstock, and adding carboxylic acid to the polyalkene feedstock.

In the present invention, polyalkylenes, typically derived from C₂-C₆ olefins and preferably polyisobutene (PIB), are the starting materials used for the reaction with sulfur trioxide. The reaction is a gas-liquid reaction that occurs either in a continuous process (e.g., falling film reactor) or in a batch process. The reaction of polyalkene with sulfur trioxide may be carried out in a manner that is well known. Preferably, the reaction of polyalkene and sulfur trioxide is accomplished by reacting a mixture of polyalkenes comprising greater than 20 mole percent alkyl vinylidene and 1,1-dialkyl isomers with a source of one of the following: sulfur trioxide and air, sulfur trioxide hydrates, sulfur trioxide amine complexes, sulfur trioxide ether complexes, sulfur trioxide phosphate complexes, acetyl sulfate, a mixture of sulfur trioxide and acetic acid, sulfamic acid, alkyl sulfates or chlorosulfonic acid. More preferably, the mixture of polyalkenes comprises polyisobutenes having a number average molecular weight of 300 to 1000, preferably 300 to 750, more preferably 350 to 600, and even more preferably 350 to 550. Most preferred are polyisobutenes having a methylvinylidene content of greater than 20%, preferably greater than 50%, and more preferably greater than 70%, and a number average molecular weight of preferably 350 to 600 and even more preferably 350 to 550.

Rath, U.S. Patent No. 5,408,018, which issued on April 18, 1995 and the references cited therein, describe a suitable process for the production of polyisobutenes that contain greater than 80 mole percent terminal vinylidene groups.

The polyalkenes, preferably derived from C₂-C₆ olefins, used to prepare the polyalkenyl sulfonic acid are typically a mixture of polyalkenes having a molecular weight of 300 to 1000. Preferably, the polyalkenes are derived from lower alkene monomers such as ethylene, propylene, butylenes, pentene and hexene. More preferably, the polyalkene is polyisobutene (PIB). The polyalkene or mixture of polyalkenes, such as polyisobutene, preferably comprises greater than 20 mole percent, more preferably greater than 50 mole percent, and most preferably greater than 70 mole percent alkyl vinylidene and 1,1-dialkyl isomers. The preferred alkylvinylidene isomer is a methyl vinylidene isomer and the preferred 1,1-diakyl isomer is a 1,1-dimethyl isomer.

When polyisobutene having a mole percent of alkyl vinylidene and 1,1-dialkyl isomers greater than 20% is used to prepare polyisobutenyl sulfonic acids or sulfonates, the molecular weight distribution of the resulting product has at least 80% of the polyisobutenyl sulfonic acids or sulfonates whose molecular weights are separated by even multiples of 56 daltons. In other words, less than 20% of the polyisobutenyl sulfonic acids or sulfonates in the molecular weight distribution of the sulfonic acids or sulfonates contain a total number of carbon atoms that is not evenly divisible by four. Preferably, the polyisobutenyl sulfonic acids prepared by the process of the present invention have molecular weights which are separated by even multiples of 56 daltons.

The reaction of the polyalkene, such as polyisobutene, and sulfur trioxide may occur in either a reaction vessel, such as a falling film reactor or a batch reactor. A preferred source of SO₃ is the product resulting from reacting an intermediate product, SO₂, with air over a catalyst. If the reaction occurs in a falling film reactor, polyisobutene is reacted with SO₃ in the presence of air where the polyisobutene is distributed on a surface as a thin film. This distribution of polyisobutene allows for both efficient contacting with SO₃ and removal of the heat of reaction. If the reaction occurs in a batch reactor, polyisobutene is reacted with SO₃ in the presence of air in a vessel where the rate of addition of the SO₃ is more critical in controlling reaction temperatures. The preferred source of SO₃ is a mixture of sulfur trioxide and air.

When used herein, the term "polyisobutene" or "PIB" is used as an example of the polyalkene employed in the present invention.

In one embodiment of the present invention, polyalkene, preferably polyisobutene, having a number average molecular weight of from about 300 to about 1000, is reacted with a source of sulfur trioxide under reactive conditions. The reaction effluent, containing a mixture of PIB sulfonic acid, sulfuric acid, recovered PIB, lower molecular weight PIB sulfonic acids, sultones and sulfur trioxide, continues to react even at ambient temperatures. The quantity of sulfonic acid decreases and the quantity of sultones, which comprises a mixture of gamma and delta isomers, increases.

The reaction of PIB with SO₃ produces a mixture comprising PIB sulfonic acids, PIB sultones, and recovered PIB. The PIB sulfonic acids have the following structure where R is the polybutene tail:

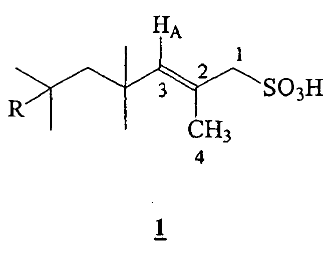

This product can be characterized by ¹H and ¹³C NMR spectroscopy. The chemical shifts for the PIB sulfonic acid **1** (dissolved in CDCl₃) are assigned as follows: ¹H NMR; 5.58 ppm (singlet, 1H, vinyl proton H_{A}), 3.71 ppm (singlet, 2H, protons on carbon atom C₁ alpha to the SO₃H group), 1.94 ppm (singlet, 3H, methyl protons on carbon C₄); ¹³C NMR; 120.0 ppm (olefin carbon C₂), 147.1 ppm (olefin carbon C₃), 63.8 ppm (carbon C₁ alpha to the SO₃H group). Minor amounts of other PIB sulfonic acids of different structures may also be present in the mixture.

The molecular weight distribution for the PIB sulfonic acid **1** can be conveniently determined by any suitable technique such as negative ion electrospray ionization mass spectrometry.

Two PIB sultones have been identified in the reaction product of PIB with SO₃. These are a gamma sultone **2** and a delta sultone **3,** which have the following structures:

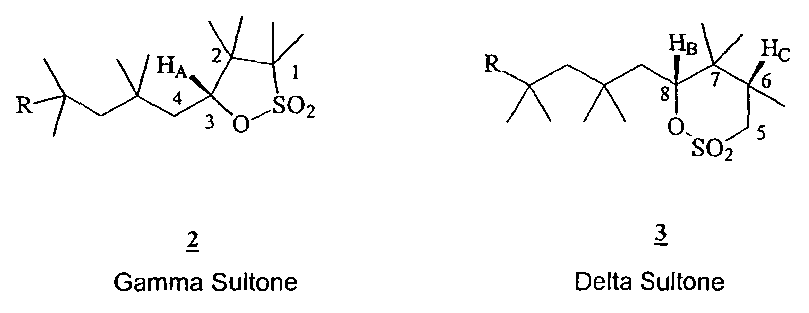

These products can be characterized by ¹H and ¹³C NMR spectroscopy. The chemical shifts for the gamma sultone **2** can be assigned as follows: ¹H NMR; 4.40 ppm (multiplet, 1H, H_{A}), 1.60 ppm (multiplet, 2H, protons on C₄). ¹³C NMR; 84.18 ppm (carbon C₃ next to the O atom), 63.21 ppm (carbon C₁ next to SO₂ group). The chemical shifts for the delta sultone **3** can be assigned as follows: ¹H NMR; 4.50 ppm (1H, triplet, J=3.9 Hz, H_{B}), 3.00 and 2.90 ppm (2H, multiplet, protons on carbon C₅ next to the SO₂), 2.28 ppm (1H, multiplet, H_{C} proton on carbon C₆). ¹³C NMR; 90.04 ppm (carbon C₈ next to the oxygen atom), 50.82 ppm (carbon C₅ next to SO₂ group). Minor amounts of other PIB sultones may also be present in the mixture.

The relative amounts of PIB sulfonic acid, PIB sultone, and recovered PIB in the PIB sulfonic acid mixture depends on the reaction conditions used during the sulfonation of the PIB with SO₃. Important process parameters include the feed temperature, the SO₃/PIB CMR, the flow rates, the residence time and space velocity, the reactor temperature, the viscosity of the feed, the film thickness, the amount of diluent, and the presence of added modifiers, such as carboxylic acid.

Surprisingly, the PIB sulfonic acids were found to be more sensitive to temperature than other sulfonic acids such as alkylbenzene sulfonic acids. At elevated temperatures, the PIB sulfonic acids react to form recovered PIB and sulfuric acid, fragment to lower molecular weight PIB sulfonic acids, and rearrange to PIB sultones. It is important to optimize the important process parameters listed above in order to increase the total yield of PIB sulfonic acid in the mixture.

To increase the sulfonic acid yield and to decrease the quantity of sultones in the product, the reaction effluent is stabilized with a neutralizing agent as the reaction product exits a first reaction vessel (that is, the sulfonation reactor) and prior to or concurrently with entering a second vessel which is used for further reaction or storage. The neutralizing agent is an alkaline earth metal hydroxide, preferably calcium hydroxide. If the PIB sulfonic acid is not neutralized, then the reaction effluent, which comprises a mixture of PIB sulfonic acid, sulfuric acid, recovered PIB, sultones, and sulfur trioxide, continues to react resulting in increased sultones and fragmentation of the polyisobutene sulfonic acid. Neutralizing the product as it leaves the falling film reactor greatly improves the quality of the product by preventing breakdown of the sulfonic acid and by preventing formation of sultones. The resultant product typically contains less than 10% sultones and the percentage of PIB sulfonic acid fragmentation contained in the product is less than 20%. The reaction product is stabilized by neutralization to from about 30% to about 150%, preferably about 60% to about 100%, and most preferably from about 70% to about 90% neutralization. The neutralization can be carried out at a temperature of between 20°C and 150°C, preferably at a temperature from 50°C to 110°C, and most preferably at a temperature from 60°C to 90°C. The time between when the PIB sulfonic acid leaves the first reactor and is stabilized by neutralization is between 2 seconds and 10 minutes. The neutralization reaction itself should take place for a period of time from 10 minutes to 10 hours, preferably 30 minutes to 7 hours, and most preferably 45 minutes to 5 hours.

Two titration methods are used to characterize sulfonic acids and/or sulfonic acids stabilized by partial or complete neutralization: (1) the Cyclohexylamine titration method and (2) the Hyamine titration method. The Cyclohexylamine titration method is a potentiometric method that measures the percent Sulfuric Acid, percent Sulfonic Acid, percent Ca as Sulfonate, and acid number of a sulfonic acid sample as reported in the Journal of American Oil Chemist Society, Volume 55, page 359 (1978) by S. Yamaguchi (ASTM D 4711 method). The Hyamine titration method is a colorimetric method that determines the percent Ca Sulfonate and the percent Hyamine Actives or HAT (Hyamine Actives Technique) which is calculated from the % Ca Sulfonate and is comparable to the % Sulfonic Acid value determined from the Cyclohexylamine titration method in both sulfonic acid and partially or fully neutralized sulfonic acid samples (ASTM D 3049 Method). The Cyclohexylamine titration measures all the sulfonic acids present in a sample regardless of their molecular weight. The Hyamine method only measures higher molecular weight (C10+ alkyl aromatic and C14+ alpha sulfonic acids or sulfonates) sulfonic acids or partially neutralized or fully neutralized sulfonate samples.

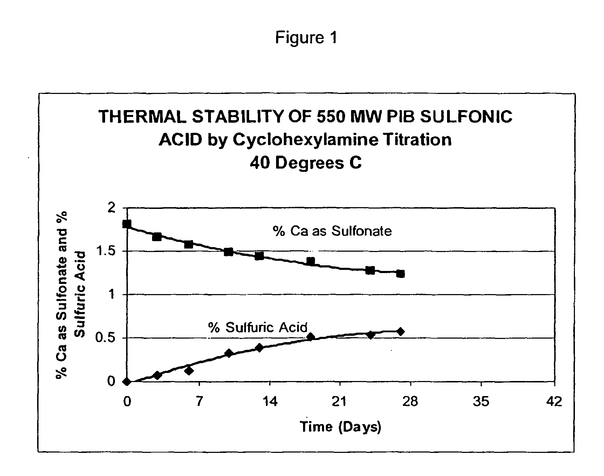

Figure 1 shows the % Ca as Sulfonate and % Sulfuric Acid levels determined by the Cyclohexylamine Titration Method for an untreated PIB sulfonic acid prepared by the SO₃/Air sulfonation of 550 MW PIB as a function of time when stored at 40°C (104°F). The data in Figure 1 is the average of two samples. The samples were stored at room temperature until the thermal stability study was begun. Thereafter, samples were maintained at temperature in an oven and samples were titrated approximately every 3 days for approximately 4 weeks. It is observed that the polyisobutene sulfonic acid % Ca as Sulfonate decreases with time and the % sulfuric acid content increases over a period of weeks.

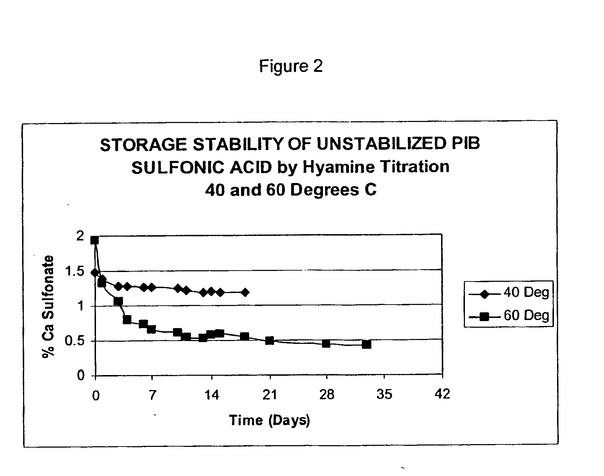

Figure 2 shows a comparison of the % Ca Sulfonate determined by the Hyamine titration method of unstabilized PIB Sulfonic acid stored at 40°C (104°F) and 60°C (140°F). The samples were stored at room temperature until the thermal stability study was begun. Thereafter, samples were maintained at temperature in an oven and samples were titrated approximately every 3 days for up to about 5 weeks. The data in Figure 2 is the average of two samples at each temperature. The 40°C data is for a 550 MW PIB sulfonic acid and the 60°C data is for a 450 MW PIB sulfonic acid. It is observed that the % Ca Sulfonate for both these unstabilized PIB sulfonic acids rapidly decreases within a week and then remains approximately constant.

The data in Figures 1 and 2 show that the polyisobutene sulfonic acid derived from SO₃/Air sulfonation is not thermally stable and the amount of the desired PIB sulfonic acid decreases when stored at moderate temperatures (40°C and 60°C).

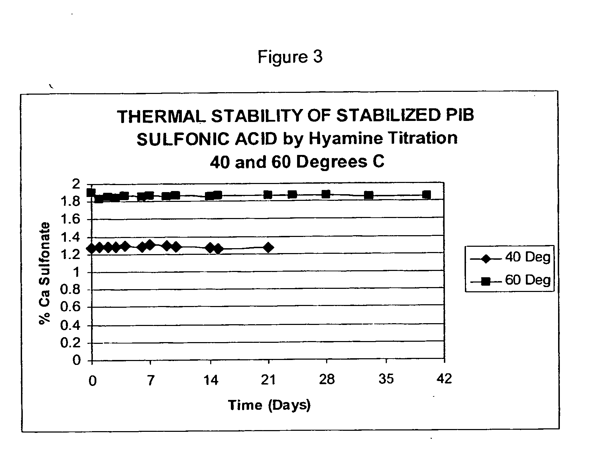

By contrast, Figure 3 shows the % Ca Sulfonate (determined by the Hyamine titration method) for PIB Sulfonic acid prepared by SO₃/Air sulfonation followed by stabilization of the PIB sulfonic acid by neutralization (with lime slurry) as a function of time when stored at 40°C (104°F) and 60°C (140°F). The samples were stored at room temperature until the thermal stability study was begun. Thereafter, the samples were maintained at temperature in an oven and samples were titrated approximately every 3 days for up to approximately seven weeks. The data shown in Figure 3 is the average of two or more samples and the 60°C data is for stabilized 450 MW PIB sulfonic acid and the 40°C data is for stabilized 550 MW PIB sulfonic acid. It is observed that the % Ca Sulfonate of the stabilized PIB sulfonic acids remains approximately constant for at least 21 days at 40°C and 60°C.

Accordingly, Figure 3 demonstrates that the amount of PIB sulfonic acid is more stable when the sample has been stabilized by neutralization compared to when the PIB sulfonic acid has not been stabilized by neutralization (see Figures 1 and 2).

If samples of PIB sulfonic acid prepared by sulfonation with sulfur trioxide/air are not stabilized, the sultone levels can increase upon storage even at room temperatures.

The sultones in a sample of 550 MW polyisobutene sulfonic acid, prepared by SO₃/Air sulfonation of the example herein below, were isolated by column chromatography and found to be present at 22.0 wt% in the unstabilized PIB sulfonic acid. If the 550 MW polyisobutene sulfonic acid is stabilized by neutralization with a slurry of lime in oil immediately following SO₃/Air sulfonation, the level of sultones isolated by chromatography was 11.7 wt%. Thus, another advantage of the present invention is the reduction in the amount of sultones present in the polyisobutene sulfonic acid produced by SO₃/Air sulfonation stabilized by neutralization of the PIB sulfonic acid which increases the amount of PIB sulfonic acid in the sample.

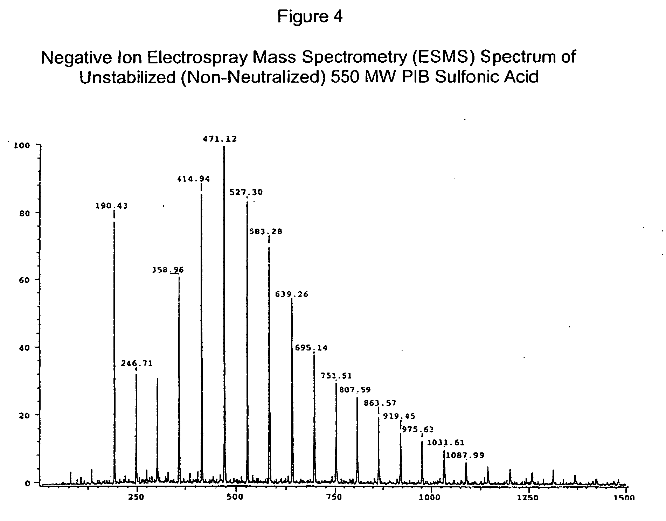

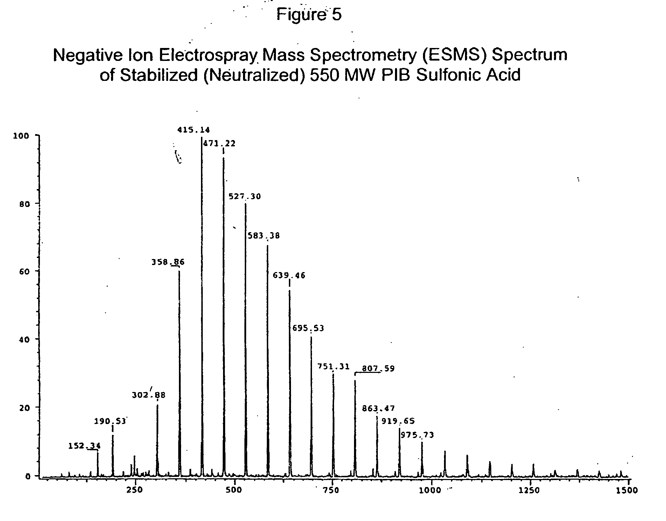

Another aspect of the present invention is a process for making a stabilized polyisobutene sulfonic acid product having reduced amounts of fragmentation products. Figure 4 shows the negative ion electrospray mass spectrum (ESMS) of an unstabilized 550 MW polyisobutene sulfonic acid produced by SO₃/Air sulfonation. The peak at m/e 190 is the C₈ sulfonic acid and the peak at m/e 247 is the C₁₂ sulfonic acid. The C₈ and C₁₂ sulfonic acids result from fragmentation reactions. Figure 5 shows the ESMS of a 550 MW PIB sulfonic acid stabilized by neutralization with a slurry of lime in oil. The PIB sulfonic acid in Figure 5 was produced by SO₃/Air sulfonation. Comparing Figures 4 and 5, stabilization of the PIB sulfonic acid by neutralization results in lower amounts of the C₈ and C₁₂ PIB sulfonic acids which are formed by fragmentation reactions.

Table I summarizes the results obtained by ESMS analysis of several 550 MW PIB sulfonic acids produced by SO₃/Air sulfonation stabilized by neutralization with a lime-oil slurry and an unstabilized 550 MW PIB sulfonic acid. Table I shows the effect of stabilizing the PIB sulfonic acid with different degrees of neutralization and the manner of neutralization (batch or inline) on the amount of C₈ and C₁₂ PIB acids present in the sample. The data in Table I show that in order to stabilize the PIB sulfonic acid by neutralization, complete neutralization is not necessary and that there is no difference between batch neutralization and inline neutralization.

**Table I**

| Comparison of the Fragmentation of Unstabilized with Stabilized 550 MW PIB Sulfonic Acids by Negative Ion Electrospray Mass Spectrometry (ESMS) | | | | |
|---|---|---|---|---|
| Sample | Degree of Neutralization (%) | Manner of Neutralization | Weight % C₈ PIB Sulfonic Acid | Weight % C₁₂ PIB Sulfonic Acid |
| 1 | 0 | None | 12.0 | 4.7 |
| 2 | 36.4 | Inline | 1.1 | 1.2 |
| 3 | 58.3 | Batch | 1.3 | 0.6 |
| 4 | 58.3 | Inline | 1.0 | 1.4 |
| 5 | 78.6 | Inline | 2.1 | 0.7 |
| 6 | 87.4 | Inline | 1.4 | 1.5 |
| 7 | 101.9 | Inline | 2.2 | 0.6 |
| 8 | 116.5 | Inline | 2.2 | 1.1 |

Another embodiment of the present invention is a reaction product that comprises stabilized PIB sulfonic acid, recovered PIB, fragmented polyisobutene molecules and sultones. Preferred percentages of fragmentation of the PIB sulfonic acid is less than 15%. Preferred percentages of sultones in the polyalkene sulfonic acid are less than 15%. More preferred percentages of sultones in the polyalkene sulfonic acid are less than 10%. Most preferred percentages of sultones in the polyalkene sulfonic acid are less than 5%.

Another embodiment of the present invention is a process for making a polyisobutene sulfonic acid product having reduced fragmentation and decreased sultone formation. In a reaction vessel, the process comprises diluting PIB feedstock with a diluent, prior to reacting polyisobutene having a number average molecular weight of from about 300 to about 1000 with a source of sulfur trioxide. The amount of diluent added to the PIB feedstock is typically up to 30% by weight. Group 2 base oils and non-aromatic solvents, such as heptane, are examples of suitable diluents. Diluting the PIB has two effects on the product. First, dilution of PIB reduces the viscosity (i.e., the PIB is less viscous) of the starting material, which improves the film quality of the PIB that attaches to the falling film reactor. Second, dilution of PIB acts as a heat sink which absorbs excess heat generated when the PIB reacts with sulfur trioxide. Fragmentation of the PIB sulfonic acid is affected by temperature. An increase in fragmentation is attributed to the increased temperature of the PIB when it reacts with sulfur trioxide. However, heating the reactor feed is necessary to minimize viscosity, which in turn improves the film quality inside the reactor. Diluting PIB with a neutral, low viscosity diluent improves film quality and minimizes the necessity of heating the reactor feed, thereby decreasing PIB molecule fragmentation. In addition, because the diluent acts as a heat sink, excess heat generated by the exothermic reactions is absorbed by the diluent. After the addition of the diluent, the diluted PIB is reacted with sulfur trioxide. The reaction product of diluted PIB and sulfur trioxide is stabilized with a neutralizing agent as the reaction product exits a first reaction vessel and prior to or concurrently with entering a second vessel which is used for further reaction or storage. The resultant product typically yields less than or equal to 15% fragmentation of the PIB sulfonate.

In another embodiment of the present invention, a small concentration of carboxylic acid is added to PIB feedstock prior to reacting the PIB with SO₃. Preferably, carboxylic acids include formic acid, acetic acid, butyric acid or benzoic acid. More preferably, the carboxylic acid is acetic acid. In a reaction vessel, a small concentration of acetic acid is added to the PIB feedstock, which may or may not be diluted with a diluent. The number average molecular weight of the PIB feedstock is generally from about 300 to about 1000. Preferably, an amount less than or equal to 10% by weight of acetic acid is added to the PIB feedstock. More preferably, an amount less than or equal to 5% by weight is added to the PIB feedstock. Most preferably, an amount less than or equal to 3% by weight is added to the PIB feedstock. The mixture comprising the PIB feedstock containing acetic acid is then reacted with a source of SO₃ as previously described. The reaction product of the PIB and SO₃ is stabilized with a neutralizing agent as the reaction product exits a first reaction vessel and prior to or concurrently with entering a second vessel which is used for further reaction or storage. PIB sulfonic acid fragmentation of the resultant reaction product is typically dependent upon the molecular weight of the PIB feedstock. At a maximum, the stabilized PIB sulfonic acid fragmentation is typically less than 15%.

In another embodiment of the present invention, the dilution of the PIB feedstock and the addition of the carboxylic acid, preferably acetic acid, may be combined with the stabilization by neutralization step after reaction of the PIB feedstock with SO₃. Accordingly, carboxylic acid is added to the PIB feedstock which is diluted with a diluent and then reacted with a source of SO₃. The reaction product is then stabilized with a neutralizing agent, such as calcium hydroxide, as the product exits a first reaction vessel and prior to or concurrently with entering a second vessel used for further reaction or storage, thereby producing a product that has a low amount of sultones and reduced fragmentation of the stabilized PIB sulfonic acid.

In another embodiment of the present invention, a product may be made by the processes as described above.

### Overbasing

In another embodiment of this invention, the stabilized polyalkenyl sulfonic acids that are prepared by the process of the present invention may be further processed by overbasing procedures to produce overbased sulfonates. Overbased materials are characterized by a metal content in excess of that which would be present according to the stoichiometry of the metal cation in the sulfonate said to be overbased. Thus, a monosulfonic acid when neutralized with an alkaline earth metal compound (or an alkaline earth metal basic salt), more preferably using a calcium compound, most preferably using calcium hydroxide (Ca(OH)₂), will produce a normal sulfonate containing one equivalent of calcium for each equivalent of acid. In other words, the normal metal sulfonate will contain one mole of calcium for each two moles of the monosulfonic acid.

The amount of overbasing can be expressed as a Total Base Number ("TBN"), which refers to the amount of base equivalent to one milligram of KOH in one gram of sulfonate. Thus, higher TBN numbers reflect more alkaline products and therefore a greater alkalinity reserve. The TBN for a composition is readily determined by ASTM test method D2896 or other equivalent methods. The preferred overbased polyalkenyl sulfonates of this invention have relatively low TBN, i.e., from about greater than 0 to about 100.

Overbasing procedures for relatively low TBN sulfonates are described in many patents including Le Coent, U.S. Patent No. 4,764,295 and Alcock et al., U.S. Patent No. 5,789,615, which are herein incorporated by reference. Known overbasing art for low overbased (LOB) sulfonates generally employ promoters such as CaCl₂ and carboxylic acids in the presence of a solvent such as 2-ethylhexanol or toluene. In the present invention, the stabilized polyalkenyl, preferably polybutenyl, sulfonic acids which have been prepared by the methods described previously are preferably overbased using only water as a promoter. A further aspect of the invention includes adding CaCl₂, but it is not required to produce a product with acceptable properties. The amount of water used for overbasing is in the range of 0.5 to 8.0 wt% of the total stabilized PIB sulfonic acid, more preferably in the range of 0.75 to 3.00 wt%. In a further embodiment of this invention, the overbasing step is conducted at much higher temperatures and pressures than previously known in the art. The overbasing temperature is from 100°C to 170°C, preferably 110°C to 150°C, while the absolute pressure during the overbasing step ranges from 103 KPa to 448 KPa (15 to 65 psia), more preferably from 110 KPa to 345 KPa (16 to 50 psia). Overbasing can also be accomplished by refluxing water at ambient pressures and temperatures from 100°C to 150°C, more preferably from 110°C to 130°C, and most preferably from 115°C to 130°C.

The overbasing conditions described herein may be utilized to overbase both stabilized and unstabilized polyalkenyl sulfonic acids.

### Lubricating Oil Compositions

The polyalkenyl sulfonates made by the process of this invention are useful as additives in lubricating oils. They have good tolerance to water, a light color, and provide good performance characteristics.

The lubricating oil compositions, which may be made by the process of this invention, comprise a major amount of an oil of lubricating viscosity and a minor amount of the polyalkenyl sulfonates of this invention. The oils can be derived from petroleum or be synthetic. The oils can be paraffinic, naphthenic, halosubstituted hydrocarbons, synthetic esters, or combinations thereof. Oils of lubricating viscosity have viscosities in the range from 35 to 55,000 SUS at 38°C (100°F), and more usually from 50 to 10,000 SUS at 38°C (100°F). The lubricating oil compositions contain an amount of the polyalkenyl sulfonates of this invention sufficient to provide dispersant properties typically from 0.1 wt% to 10 wt%, preferably from 0.5 wt% to 7 wt%.

Other conventional additives that can be used in combination with the polyalkenyl sulfonates of this invention include oxidation inhibitors, antifoam agents, viscosity index improvers, pour point depressants and dispersants.

The lubricating oil compositions made by the process of this invention are useful for lubricating internal combustion engines and automatic transmissions, and as industrial oils such as hydraulic oils, heat transfer oils, torque fluids.

When used as detergents or dispersants, these additives may be used at 0.2 wt% to 10 wt% of the total lubricating oil composition and preferably at 0.5 wt% to 8 wt%, and more preferably at 1 wt% to 6 wt% of the total lubricating oil composition.

The lubricating oil used with these additive compositions may be mineral oil or synthetic oils of lubricating viscosity and preferably suitable for use in the crankcase of an internal combustion engine. Crankcase lubricating oils ordinarily have a viscosity of about 1300 cSt at 0°F (-18°C) to 22.7 cSt at 210°F (99°C). The lubricating oils may be derived from synthetic or natural sources. Hydrocarbon synthetic oils may include, for example, oils prepared from the polymerization of ethylene, polyalphaolefin or PAO oils, or oils prepared from hydrocarbon synthesis procedures using carbon monoxide and hydrogen gases such as in a Fisher-Tropsch process. Mineral oil for use as the base oil in this invention may include paraffinic, naphthenic and other oils that are ordinarily used in lubricating oil compositions. Synthetic oils include both hydrocarbon synthetic oils and synthetic esters. Useful synthetic hydrocarbon oils include liquid polymers of alpha olefins having the proper viscosity. The hydrogenated liquid oligomers of C₆ to C₁₂ alpha olefins such as 1-decene trimer are especially useful. Alkyl benzenes of proper viscosity, such as didodecyl benzene, may also be used.

Hydrocarbon oils blended with synthetic oils may also be useful. For example, blends of 10 to 25 wt% hydrogenated 1-decene trimer with 75 to 90 wt% 150 SUS (100°F) mineral oil are preferred as a lubricating oil base.

Another embodiment of the present invention is lubricating oil concentrates. These concentrates usually include from 90 wt% to 10 wt%, preferably from 90 wt% to 50 wt%, of an oil of lubricating viscosity and from 10 wt% to 90 wt%, preferably from 10 wt% to 50 wt%, of the additives described herein. Typically, the concentrates contain sufficient diluent to make them easy to handle during shipping and storage. Suitable diluents for the concentrates include any inert diluent, preferably an oil of lubricating viscosity, so that the concentrate may be readily mixed with lubricating oils to prepare lubricating oil compositions. Suitable lubricating oils that may be used as diluents typically have viscosity in the range from 35 to 500 Saybolt Universal Seconds (SUS) at 100°F (38°C), although any oil of lubricating viscosity may be used.

Other additives that may be used include rust inhibitors, foam inhibitors, corrosion inhibitors, metal deactivators, pour point depressants, antioxidants, and a variety of other well-known additives.

### Other Additives

The following additive components are examples of some of the components that can be favorably employed in the present invention. These examples of additives are provided to illustrate the present invention:
1. Metal Detergents
   Sulfurized or unsulfurized alkyl or alkenyl phenates, alkyl or alkenyl aromatic sulfonates, sulfurized or unsulfurized metal salts of multi-hydroxy alkyl or alkenyl aromatic compounds, alkyl or alkenyl hydroxy aromatic sulfonates, sulfurized or unsulfurized alkyl or alkenyl naphthenates, metal salts of alkanoic acids, metal salts of an alkyl or alkenyl multiacid, and chemical and physical mixtures thereof.
2. Anti-Oxidants
   Anti-oxidants reduce the tendency of mineral oils to deteriorate in service which deterioration is evidenced by the products of oxidation such as sludge and varnish-like deposits on the metal surfaces and by an increase in viscosity. Examples of anti-oxidants useful in the present invention include, but are not limited to, phenol type (phenolic) oxidation inhibitors, such as 4,4'-methylene-bis(2,6-di-tert-butylphenol), 4,4'-bis(2,6-di-tert-butylphenol), 4,4'-butylidene-bis(2-methyl-6-tert-butylphenol), 2,2'-methylene-bis(4-methyl-6-tert-butylphenol), 4,4'-butylidene-bis(3-methyl-6-tert-butylphenol), 4,4'-isopropylidene-bis(2,6-di-tert-butylphenol), 2,2'-methylene-bis(4-methyl-6-nonylphenol), 2,2'-isobutylidene-bis(4,6-dimethylphenol), 2,2'-5 methylene-bis(4-methyl-6-cyclohexylphenol), 2,6-di-tert-butyl-4-methylphenol, 2,6-di-tert-butyl-4-ethylphenol, 2,4-dimethyl-6-tert-butyl-phenol, 2,6-di-tert-1-dimethylamino-p-cresol, 2,6-di-tert-4-(N,N'-dimethylaminomethylphenol), 4,4'-thiobis(2-methyl-6-tert-butylphenol), 2,2'-thiobis(4-methyl-6-tert-butylphenol), bis(3-methyl-4-hydroxy-5-tert-10-butylbenzyl)-sulfide, and bis(3,5-di-tert-butyl-4-hydroxybenzyl). Diphenylamine-type oxidation inhibitors include, but are not limited to, alkylated diphenylamine, phenyl-alpha-naphthylamine, and alkylated-alpha-naphthylamine. Other types of oxidation inhibitors include metal dithiocarbamate (e.g., zinc dithiocarbamate), and methylenebis(dibutyldithiocarbamate). The anti-oxidant is generally incorporated into an engine oil in an amount of 0 to 10 wt%, preferably 0.05 to 3.0 wt%, per total amount of the engine oil.
3. Anti-Wear Agents
   As their name implies, these agents reduce wear of moving metallic parts. Examples of such agents include to, phosphates, carbamates, esters, and molybdenum complexes.
4. Rust Inhibitors (Anti-Rust Agents)
   (a) Nonionic polyoxyethylene surface active agents: polyoxyethylene lauryl ether, polyoxyethylene higher alcohol ether, polyoxyethylene nonyl phenyl ether, polyoxyethylene octyl phenyl ether, polyoxyethylene octyl stearyl ether, polyoxyethylene oleyl ether, polyoxyethylene sorbitol monostearate, polyoxyethylene sorbitol mono-oleate, and polyethylene glycol mono-oleate.
   (b) Other compounds: stearic acid and other fatty acids, dicarboxylic acids, metal soaps, fatty acid amine salts, metal salts of heavy sulfonic acid, partial carboxylic acid ester of polyhydric alcohol, and phosphoric ester.
5. Demulsifiers
   Addition product of alkylphenol and ethylene oxide, polyoxyethylene alkyl ether, and polyoxyethylene sorbitan ester.
6. Extreme Pressure Anti-Wear Agents (EP/AW Agents)
   Zinc dialkyl dithiophosphate (primary alkyl, secondary alkyl, and aryl type), diphenyl sulfide, methyl trich lorostea rate, chlorinated naphthalene, fluoroalkylpolysiloxane, lead naphthenate, neutralized phosphates, dithiophosphates, and sulfur-free phosphates.
7. Friction Modifiers
   Fatty alcohol, fatty acid, amine, borated ester, and other esters.
8. Multifunctional Additives
   Sulfurized oxymolybdenum dithiocarbamate, sulfurized oxymolybdenum organo phosphorodithioate, oxymolybdenurn monoglyceride, oxymolybdenurn diethylate amide, amine-molybdenum complex compound, and sulfur-containing molybdenum complex compound.
9. Viscosity Index Improvers
   Polymethacrylate type polymers, ethylene-propylene copolymers, styrene-isoprene copolymers, hydrated styrene-isoprene copolymers, polyisobutylene, and dispersant type viscosity index improvers.
10. Pour Point Depressants
   Polymethyl methacrylate.
11. Foam Inhibitors
   Alkyl methacrylate polymers and dimethyl silicone polymers.
12. Metal Deactivators
   Disalicylidene propylenediamine, triazole derivatives, mercaptobenzothiazoles, and mercaptobenzimidazoles.

It is also contemplated that the additives described herein may be employed as dispersants and detergents in hydraulic fluids and marine crankcase lubricants. When so employed, the additive is added from 0.1 to 10% by weight to the oil. Preferably, the additive is added from 0.5 to 8 wt%.

### SULFONATION EXAMPLES

### Example 1

### Effect of Stabilization by Neutralization On Sultone Formation

In a falling film reactor, SO₃ in air was reacted with PIB having a Mn of 550 MW using the following conditions: SO₃/PIB molar ratio = 1.015; feed temperature = 90°C; reactor temperature = 77.6°C; SO3 concentration in air = 1.5%; SO₃ loading = 0.371 kg/cm-hr; SO3/Air gas inlet temperature = 50°C; PIB feed flow rate = 12.0 kg/hr; SO₃ flow rate = 1.77 kg/hr. Immediately (within 5 seconds) after formation in the sulfonation reactor, the PIB sulfonic acid was stabilized by neutralization with a lime-oil slurry (10.6 wt% Ca(OH)₂ in Group I 100N oil). The degree of neutralization was 145%. After mixing the PIB sulfonic acid with the lime slurry, the mixture was passed through an inline static mixer and then into a stirred tank neutralization vessel held at 72°C. Chromatographic analysis of the stabilized product showed it to contain 29.0 wt% recovered PIB, 11.7 wt% sultones, and 59.2 wt% sulfonic acid.

### Comparative Example 1A

### Sultone Formation In A Non-Neutralized Acid

In a falling film reactor, SO₃ was reacted with PIB having a Mₙ of 550 MW exactly as in Example 1, except that following sulfonation, the PIB sulfonic acid was not stabilized by neutralization. Analysis of this unstabilized, unneutralized PIB sulfonic acid by chromatography showed it to contain 23.0 wt% recovered PIB, 22.0 wt% sultones, and 54.0 wt% sulfonic acid.

### Example 2

### Effect of Stabilization by Neutralization and Oil Dilution of the PIB on Sultone Formation

In a falling film reactor, SO₃ in air was reacted with a mixture of 70 wt% PIB having a Mn of 550 MW and 30 wt% oil (Group I 100 Neutral Oil) using the following conditions: SO₃/PIB molar ratio = 0.900; feed temperature = 90°C; reactor temperature = 67.5°C; SO₃ concentration in air = 1.4 %; SO₃ loading = 0.347 kg/cm^{-hr}; SO₃/Air gas inlet temperature = 50°C; PIB feed flow rate = 18.10 kg/hr; SO₃ flow rate = 1.66 kg/hr. Immediately (within 5 seconds) after formation in the sulfonation reactor, the mixture of PIB sulfonic acid and oil was stabilized by neutralization with a lime-oil slurry (10.6 wt% Ca(OH)₂ in Group I 100N oil). The degree of neutralization was 145%. After mixing the PIB sulfonic acid with the lime slurry, the mixture was passed through an inline static mixer and then into a stirred tank neutralization vessel held at 72°C. Chromatographic analysis of the stabilized product showed it to contain 26.0% recovered PIB, 4.7% sultones, and 69.3% sulfonic acid, correcting for the diluent oil.

### Comparative Example 2A

### Sultone Formation in a Non-Neutralized Acid and with Oil Dilution

In a falling film reactor, SO₃ in air was reacted with a mixture of 70 wt% PIB having a Mn of 550 MW and 30 wt% oil (Group I 150 Neutral Oil) exactly as in Example 2, except that following sulfonation, the PIB sulfonic acid was not stabilized by neutralization. Analysis of this unstabilized, unneutralized PIB sulfonic acid by chromatography showed it to contain 21.2 wt% recovered PIB, 23.0 wt% sultones, and 55.6 wt% sulfonic acid.

The results of Examples 1-2 and Comparative Examples 1A-2A are summarized in Table II.

**Table II**

| Comparison of Chromatographic Analytical Results for Stabilized (Neutralized) and Unstabilized (Non-Neutralized) 550 MW PIB Sulfonic Acid | | | |
|---|---|---|---|
| Sample | Recovered PIB (%) | Sultones (%) | PIB Sulfonic Acid (%) |
| Example 1 Neutralized PIB Sulfonic Acid | 29.0 | 11.7 | 59.2 |
| Comparative Example 1A Non-Stabilized (Non-neutralized) PIB Sulfonic Acid | 23.0 | 22.0 | 54.0 |
| Example 2 Diluted PIB and Stabilized (Neutralized) PIB Sulfonic Acid | 26.0 | 4.7 | 69.3 |
| Comparative Example 2A Diluted PIB and Non-Stabilized (Non-Neutralized) PIB Sulfonic Acid | 21.2 | 23.0 | 55.6 |

### Example 3

### Sulfonation of 450 MW PIB Using Optimized Conditions

In a falling film reactor, SO₃ in air was reacted with PIB having a Mn of 450 MW using the following conditions: SO₃/PIB molar ratio = 1.035; feed temperature = 75°C; reactor temperature = 60°C; SO₃ concentration in air = 4.0%; SO₃ loading = 0.875 kg/cm-hr; SO₃/Air gas inlet temperature = 50°C; PIB flow rate = 22.74 kg/hr; SO₃/Air flow rate = 4.19 kg/hr. Immediately (within 5 seconds) after formation in the sulfonation reactor, the PIB sulfonic acid was stabilized by neutralization with a lime-oil slurry (25.0 wt% lime in oil) at a ratio of 95 gr (0.21 pounds) of slurry per 453 gr (pound) of PIB acid at 55°C in an inline mixer. After mixing the PIB sulfonic acid with the lime slurry, the mixture was passed through an inline static mixer and then into a stirred tank vessel held at approximately 72°C. The degree of neutralization was 89%. Analysis of the resulting stabilized PIB sulfonic acid showed the following: % Ca Sulfonate by Hyamine titration = 1.93; % Ca = 2.26; % S = 4.83, Viscosity = 207 cSt (100°C).

### Example 4

### Large Scale Preparation of Stabilized 550 MW PIB Sulfonic Acid

In a falling film reactor, SO₃ in air was reacted with a mixture of 70 wt% PIB having a Mn of 550 MW and 30 wt% oil (Group 100 Neutral Oil) using the following conditions: SO₃/PIB molar ratio = 0.825; feed temperature = 90°C; reactor temperature = 67.5°C; SO₃ concentration in air = 3.6%; SO₃ loading = 0.800 kg/cm^{-hr}; SO₃/Air gas inlet temperature = 50°C; feed flow rate = 41.4 kg/hr; SO₃ flow rate = 3.83 kg/hr. Immediately (within 5 seconds) after formation in the sulfonation reactor, the mixture of PIB sulfonic acid and oil was stabilized by neutralization with a lime-oil slurry (25.0 wt% Ca(OH)₂ in Group I 100N oil) at a ratio of 95 gr (0.21 pounds) of slurry per 453 gr (pound) of product exiting the sulfonation reactor. The degree of neutralization was 87.4%. After mixing the PIB sulfonic acid/diluent oil with the lime slurry, the mixture was passed through an inline static mixer and then into a 19 liter (5 gallon) stirred tank neutralization vessel. Once the stirred tank neutralization vessel was full, it was replaced with another 5 gallon vessel and the previous 19 liter (5 gallon) vessel was stirred for an additional 30 minutes. A total of approximately 114 l (30 gallons) of stabilized PIB sulfonic acid was prepared in this manner.

### OVERBASING EXAMPLES

### Example 5

A 3.5 liter autoclave was charged with 1824 grams of the stabilized 550 MW PIB sulfonic acid prepared according to Example 4. Then 7.5 grams of a 32% CaCl₂ solution and 40 grams of water were added to the autoclave along with 45 grams of lime and 121 grams of 100N neutral oil with agitation. The autoclave was heated to 149°C over 1 hour and during this heatup, when the temperature reached 45°C, the vent line on the autoclave was closed to prevent the escape of any water vapors. The autoclave was then held at 149°C for 3 hours during which time the pressure in the autoclave rose to a maximum absolute pressure of 276 KPa (40 psia). After the three-hour hold, the autoclave was slowly vented to atmospheric pressure. The temperature was then raised to 160°C over 5 minutes and the absolute pressure was reduced to approximately 2.76 KPa (0.4 psia). After holding the autoclave for 15 minutes at these conditions, the autoclave was pressurized to atmospheric pressure with nitrogen and the autoclave was cooled to room temperatures. The crude product had a sediment of 0.4 volume %. The product was filtered and analysis of the filtered product showed it to have the following properties: TBN = 19, viscosity (at 100°C) = 113 cSt, Chloride = 660 ppm, % Ca Sulfonate = 1.32 by the Hyamine titration method, Total % Ca = 2.4.

### Example 6

The procedures described in Example 5 were repeated exactly except the autoclave was vented to atmosphere during the entire time the autoclave as at 149°C. The crude product had a sediment of 1.8 volume %. Analysis of the filtered product showed it to have the following properties: TBN = 8, viscosity = 215 cSt (100°C).

### Example 7

The procedures described in Example 5 were repeated exactly except no water was added to the autoclave. The crude product had a sediment level of 1.0 volume % and analysis of the filtered product showed it to have the following properties: TBN = 15, viscosity = 109 cSt (100°C).

### Example 8

The procedures described in Example 5 were repeated exactly and the water charge was 80 grams. The crude product had a sediment level of 1.0 volume % and analysis of the filtered product showed it to have the following properties: TBN = 17, viscosity = 134 cSt (100°C).

### Example 9

The procedures described in Example 5 were repeated exactly except an autoclave temperature of 120°C was used instead of 149°C and the autoclave was held at 120°C for 5 hours instead of 149°C for 3 hours. The crude product had a sediment of 1.6 volume % and analysis of the filtered product showed it to have the following properties: TBN = 17, viscosity = 114 cSt (100°C).

### Example 10

A 38 liter (10 gallon) reactor was charged with 15998 grams of the stabilized 450 MW PIB sulfonic acid prepared in Example 3 followed by 5698 grams of diluent oil (Group I, 100N) followed by 614 grams of lime, 83 grams of a 35 wt% CaCl₂ aqueous solution, and 203 grams of water with agitation. As in Example 5, the reactor was heated to 149°C over 1 hour and when the reactor reached 52°C, the reactor vent line was closed and the reactor was held at 149°C for 3 hours during which the reactor absolute pressure increased to 200 KPa (29 psia). After 3 hours, the reactor was slowly vented to atmospheric pressure and then the absolute pressure was then decreased to 6.89 KPa (1 psia). The reactor was held 149°C and 1 psia for 30 minutes. The reactor pressure was then increased to atmospheric pressure with nitrogen and cooled to ambient temperature. Following filtration, analysis of the final product showed to have the following properties: TBN = 22, viscosity = 106 cSt (100°C), Chloride = 859 ppm, % Calcium = 3.05, % Ca Sulfonate = 1.65 by the Hyamine titration method.

### CHROMATOGRAPHY EXAMPLE

### Example 11

### Isolation of Sultones by Chromatography

The following is an example of the chromatographic procedure used to isolate the sultones from stabilized and unstabilized PIB sulfonic acid. The product from Example 2, 4.05 grams, was dissolved in approximately 30 mls of hexane and placed on a chromatography column (75 ml column volume containing 10 gms of silica gel obtained from Alltech Corporation, Part Number 139310). The column was then eluded with successive volumes of solvent and three fractions were collected, concentrated by removal of the solvent and the material isolated in the fractions was then weighed. The following results were obtained: Fraction 1, 100 mls hexane, 1.93 gms consisting of 1.21 gms of oil and 0.72 gms (26 wt% based on PIB) of recovered PIB; Fraction 2, 100 mls 50:50 by volume toluene:dichloromethane, 0.13 gms of sultones (4.7 wt%); Fraction 3, 100 mls methanol, 1.92 gms of PIB sulfonic acid, (69.3 wt%).

## Claims

1. A process for making a stabilized polyalkenyl sulfonic acid comprising:
(a) reacting a polyalkene with SO₃ in a first reaction vessel; and
(b) stabilizing the product of step (a) by neutralizing with a neutralizing agent as the product of step (a) exits the first reaction vessel and prior to or concurrently with entering a second vessel for further reaction or storage, wherein neutralization occurs in the absence of ammonia or sodium hydroxide, wherein the neutralizing agent is an alkaline earth material hydroxide, and wherein the time between when the product of step (a) exits the first reaction vessel and is stabilized by neutralization is between 2 seconds and 10 minutes.

2. The process according to Claim 1 wherein the product of step (b) contains less than 20% sultones.

3. The process according to Claim 1 wherein the polyalkene is polyisobutene.

4. The process according to Claim 3 wherein the polyisobutene comprises greater than 20 mole percent of alkylvinylidene and 1,1-dialkyl isomers.

5. The process according to Claim 4 wherein the polyisobutene comprises greater than 50 mole percent of alkylvinylidene and 1,1-dialkyl isomers.

6. The process according to Claim 5 wherein the polyisobutene comprises greater than 70 mole percent of alkylvinylidene and 1,1-dialkyl isomers.

7. The process according to Claim 1 wherein the alkaline earth metal hydroxide is calcium hydroxide.

8. The process according to Claim 1 wherein the polyalkene has a number average molecular weight of 300 to 1000.

9. The process according to Claim 8 wherein the polyalkene has a number average molecular weight of 300 to 750.

10. The process according to Claim 9 wherein the polyalkene has a number average molecular weight of 350 to 600.

11. The process according to Claim 1 wherein the amount of fragmentation in the product of step (b) is less than 15%.

12. The process according to Claim 1 further comprising mixing a carboxylic acid with the polyalkene prior to reacting with SO₃.

13. The process according to Claim 12 wherein the polyalkene is polyisobutene.

14. The process according to Claim 13 wherein the polyisobutene has a number average molecular weight of at least 300 to 1000.

15. The process according to Claim 12 wherein the carboxylic acid is acetic acid.

16. The process according to Claim 1 further comprising diluting the polyalkene prior to reaction with SO₃.

17. The process according to Claim 16 wherein the diluted polyalkene is mixed with carboxylic acid prior to reaction with SO₃.

18. The process according to Claim 1 further comprising the step of overbasing the neutralized product of step (b) with an alkaline earth metal basic salt.

19. The process according to Claim 18 wherein water is used as a promoter.

20. The process according to Claim 19 wherein the amount of water used is from 0.5 to 8.0 wt% of the total stabilized polyalkenyl sulfonic acid.

21. The process according to Claim 18 wherein the overbasing temperature is from 100°C to 170°C.

22. The process according to Claim 18 wherein the overbasing absolute pressure is from 103 to 448 kPa (15 to 65 psia).

23. A process for oberbasing polyalkenyl sulfonic acids comprising overbasing the polyalkenyl sulfonic acid with an alkaline earth metal basic salt and wherein water is used as a promoter.

24. The process according to Claim 23 wherein the amount of water used is from 0.5 to 8.0 wt% of polyalkenyl sulfonic acid.

25. The process according to Claim 23 wherein the overbasing temperature is from 100°C to 170°C.

26. The process according to Claim 23 wherein the overbasing absolute pressure is from 103 to 448 kPa (15 to 65 psia).

## Patentansprüche

1. Verfahren zur Herstellung einer stabilisierten Polyalkenylsulfonsäure, umfassend:
(a) das Umsetzen eines Polyalkens mit SO₃ in einem ersten Reaktionsbehälter; und
(b) Stabilisieren des Produkts aus Schritt (a) durch Neutralisieren mit einem Neutralisierungsmittel, wenn das Produkt aus Schritt (a) den ersten Reaktionsbehälter verlässt, und vor oder zeitgleich mit dem Eintritt in einen zweiten Behälter, für eine weitere Umsetzung oder Aufbewahrung, wobei die Neutralisierung in der Abwesenheit von Ammoniak oder Natriumhydroxid erfolgt, wobei das Neutralisierungsmittel ein Erdalkalimetallhydroxid ist, und wobei die Zeit zwischen dem Austritt des Produkts von Schritt (a) aus dem ersten Reaktionsbehälter und der Stabilisierung durch Neutralisierung 2 Sekunden bis 10 Minuten beträgt.

2. Verfahren nach Anspruch 1, wobei das Produkt von Schritt (b) weniger als 20% Sultone aufweist.

3. Verfahren nach Anspruch 1, wobei das Polyalken Polyisobuten ist.

4. Verfahren nach Anspruch 3, wobei das Polyisobuten mehr als 20 Molprozent Alkylvinyliden und 1,1-Dialkylisomere umfasst.

5. Verfahren nach Anspruch 4, wobei das Polyisobuten mehr als 50 Molprozent Alkylvinyliden und 1,1-Dialkylisomere umfasst.

6. Verfahren nach Anspruch 5, wobei das Polyisobuten mehr als 70 Molprozent Alkylvinyliden und 1,1-Dialkylisomere umfasst.

7. Verfahren nach Anspruch 1, wobei das Erdalkalimetallhydroxid Calciumhydroxid ist.

8. Verfahren nach Anspruch 1, wobei das Polyalken ein Molekulargewichtszahlenmittel von 300 bis 1000 aufweist.

9. Verfahren nach Anspruch 8, wobei das Polyalken ein Molekulargewichtszahlenmittel von 300 bis 750 aufweist.

10. Verfahren nach Anspruch 9, wobei das Polyalken ein Molekulargewichtszahlenmittel von 350 bis 600 aufweist.

11. Verfahren nach Anspruch 1, wobei das Ausmaß der Fragmentierung in dem Produkt von Schritt (b) kleiner als 15% ist.

12. Verfahren nach Anspruch 1, zudem umfassend das Mischen einer Carbonsäure mit dem Polyalken vor dem Umsetzen mit SO₃.

13. Verfahren nach Anspruch 12, wobei das Polyalken Polyisobuten ist.

14. Verfahren nach Anspruch 13, wobei das Polyisobuten ein Molekulargewichtszahlenmittel von mindestens 300 bis 1000 aufweist.

15. Verfahren nach Anspruch 12, wobei die Carbonsäure Essigsäure ist.

16. Verfahren nach Anspruch 1, zudem umfassend das Verdünnen des Polyalkens vor der Umsetzung mit SO₃.

17. Verfahren nach Anspruch 16, wobei das verdünnte Polyalken mit Carbonsäure vor dem Umsetzen mit SO₃ gemischt wird.

18. Verfahren nach Anspruch 1, zudem umfassend den Schritt Überalkalisieren des neutralisierten Produkts von Schritt (b) mit einem basischen Erdalkalimetallsalz.

19. Verfahren nach Anspruch 18, wobei Wasser als Promotor verwendet wird.

20. Verfahren nach Anspruch 19, wobei die verwendete Menge Wasser von 0,5 bis 8,0 Gewichtsprozent der gesamten stabilisierten Polyalkenylsulfonsäure reicht.

21. Verfahren nach Anspruch 18, wobei die Überalkalisierungstemperatur von 100°C bis 170°C reicht.

22. Verfahren nach Anspruch 18, wobei der absolute Druck der Überalkalisierung von 103 bis 448 kPa (15 bis 65 psia) reicht.

23. Verfahren zum Überalkalisieren von Polyalkenylsulfonsäuren, umfassend das Überalkalisieren der Polyalkenylsulfonsäure mit einem basischen Erdalkalimetallsalz, wobei Wasser als Promotor verwendet wird.

24. Verfahren nach Anspruch 23, wobei die verwendete Menge Wasser von 0,5 bis 8,0 Gewichtsprozent der Polyalkenylsulfonsäure reicht.

25. Verfahren nach Anspruch 23, wobei die Überalkalisierungstemperatur von 100°C bis 170°C reicht.

26. Verfahren nach Anspruch 23, wobei der absolute Druck der Überalkalisierung von 103 bis 448 kPa (15 bis 65 psia) reicht.

## Revendications

1. Procédé pour la préparation d'un acide polyalcénylsulfonique stabilisé, comprenant .
(a) la réaction d'un polyalcène avec SO₃ dans un premier récipient de réaction ; et
(b) la stabilisation du produit de l'étape (a) par neutralisation avec un agent neutralisant lorsque le produit de l'étape (a) quitte le premier récipient de réaction et avant, ou conjointement avec, l'entrée dans un second récipient pour une réaction supplémentaire ou un stockage, où la neutralisation se produit en l'absence d'ammoniac ou d'hydroxyde de sodium, où l'agent neutralisant est un hydroxyde de métal alcalino-terreux, et où le temps entre le moment où le produit de l'étape (a) quitte le premier récipient de réaction et le moment où il est stabilisé par neutralisation va de 2 secondes à 10 minutes.

2. Procédé suivant la revendication 1, dans lequel le produit de l'étape (b) contient moins de 20 % de sultones.

3. Procédé suivant la revendication 1, dans lequel le polyalcène est le polyisobutène.

4. Procédé suivant la revendication 3, dans lequel le polyisobutène comprend plus de 20 % en moles d'isomères alkylvinylidène et 1,1-dialkyle.

5. Procédé suivant la revendication 4, dans lequel le polyisobutène comprend plus de 50 % en moles d'isomères alkylvinylidène et 1,1-dialkyle.

6. Procédé suivant la revendication 5, dans lequel le polyisobutène comprend plus de 70 % en moles d'isomères alkylvinylidène et 1,1-dialkyle.

7. Procédé suivant la revendication 1, dans lequel l'hydroxyde de métal alcalino-terreux est l'hydroxyde de calcium.

8. Procédé suivant la revendication 1, dans lequel le polyalcène a une moyenne en nombre du poids moléculaire de 300 à 1000.

9. Procédé suivant la revendication 8, dans lequel le polyalcène a une moyenne en nombre du poids moléculaire de 300 à 750.

10. Procédé suivant la revendication 9, dans lequel le polyalcène a une moyenne en nombre du poids moléculaire de 350 à 600.

11. Procédé suivant la revendication 1, dans lequel la quantité de fragmentation dans le produit de l'étape (b) est inférieure à 15 %.

12. Procédé suivant la revendication 1, comprenant en outre le mélange d'un acide carboxylique au polyalcène avant réaction avec SO₃.

13. Procédé suivant la revendication 12, dans lequel le polyalcène est le polyisobutène.

14. Procédé suivant la revendication 13, dans lequel le polyisobutène a une moyenne en nombre du poids moléculaire d'au moins 300 à 1000.

15. Procédé suivant la revendication 12, dans lequel l'acide carboxylique est l'acide acétique.

16. Procédé suivant la revendication 1, comprenant en outre la dilution du polyalcène avant réaction avec SO₃.

17. Procédé suivant la revendication 16, dans lequel le polyalcène dilué est mélangé à l'acide carboxylique avant réaction avec SO₃.

18. Procédé suivant la revendication 1, comprenant en outre l'étape consistant à rendre surbasique le produit neutralisé de l'étape (b) avec un sel basique de métal alcalino-terreux.

19. Procédé suivant la revendication 18, dans lequel de l'eau est utilisée comme promoteur.

20. Procédé suivant la revendication 19, dans lequel la quantité d'eau utilisée est de 0,5 à 8,0 % en poids de l'acide polyalcénylsulfonique stabilisé total.

21. Procédé suivant la revendication 18, dans lequel la température de traitement surbasique est de 100°C à 170°C.

22. Procédé suivant la revendication 18, dans lequel la pression absolue de traitement surbasique est de 103 à 448 kPa (15 à 65 psia).

23. Procédé pour rendre surbasiques des acides polyalcénylsulfoniques, comprenant le traitement surbasique de l'acide polyalcénylsulfonique avec un sel basique de métal alcalino-terreux, et dans lequel de l'eau est utilisée comme promoteur.

24. Procédé suivant la revendication 23, dans lequel la quantité d'eau utilisée est de 0,5 à 8,0 % en poids de l'acide polyalcénylsulfonique.

25. Procédé suivant la revendication 23, dans lequel la température de traitement surbasique est de 100°C à 170°C.

26. Procédé suivant la revendication 23, dans lequel la pression absolue de traitement surbasique est de 103 à 448 kPa (15 à 65 psia).
